# FASCICULE DE BREVET EUROPEEN

(11) **EP 1 046 102 B1**
(45) Date de publication et mention de la délivrance du brevet: **04.05.2005**
(21) Numéro de dépôt: 99950862.5
(22) Date de dépôt: 28.10.1999
(51) Int. Cl.: G06F 9/44

(54) **DERIVATION D'UNE CLASSE D'OBJETS PAR HERITAGE, INSTANCIATION OU CLONAGE**
ABLEITUNG EINER OBJEKTKLASSE DURCH VERERBUNG, INSTANZIERUNG ODER KLONIERUNG
DERIVING AN OBJECT CLASS BY INHERITANCE, INSTANCIATION OR CLONING

(30) Priorité: 30.10.1998 FR 9813643
(43) Date de publication de la demande: 25.10.2000
(73) Titulaire: BULL S.A., 78434 Louveciennes Cedex (FR)
(72) Inventeur: NACHEF, Armand, F-78180 Montigny le Bretonneux (FR); SITBON, Gérard, F-75014 Paris (FR)
(86) Numéro de dépôt international: PCT/FR1999/002630
(87) Numéro de publication internationale: WO 2000/026775

(56) Documents cités:
- US-A- 5 493 680
- US-A- 5 710 926
- "SUPPORT COPY WITH RELATIONS" RESEARCH DISCLOSURE, no. 315, 1 juillet 1990 (1990-07-01), page 563 XP000134155 ISSN: 0374-4353
- ANCONA M ET AL: "A TRIP TO OBJECT-ORIENTED LAND" MICROPROCESSING AND MICROPROGRAMMING, vol. 35, no. 1 / 05, 1 septembre 1992 (1992-09-01), pages 195-202, XP000325124 ISSN: 0165-6074
- "GRAPHICAL USER INTERFACE FOR MANAGING COMPLEX OBJECT TREES" IBM TECHNICAL DISCLOSURE BULLETIN, vol. 34, no. 11, 1 avril 1992 (1992-04-01), pages 387-389, XP000303302 ISSN: 0018-8689

## Description

### Domaine technique.

L'invention se rapporte à la dérivation d'une classe d'objets par héritage, instanciation ou clonage dans un système informatique. Elle s'applique à tout programme d'ordinateur utilisant un langage orienté objet, tel que celui connu actuellement sous le nom de C++ ou de Java®, ainsi qu'à tout système informatique. Elle a pour objets un procédé de dérivation d'une classe d'objets ou d'un objet par héritage, instanciation ou clonage, ainsi que le système informatique mettant en oeuvre ce procédé.

### L'art antérieur.

Une classe d'objets comprend comme membres au moins un attribut et au moins une méthode. On prendra comme exemple une classe "impression" relative à l'impression, dans un système informatique, de relevés de compte bancaire de clients. La classe peut avoir comme premier attribut la liste de diffusion selon un ensemble de critères, tels que le montant du compte courant de chaque client et, comme second attribut, le nombre d'exemplaires du relevé de chaque client. La classe peut aussi avoir une première méthode "imprimer" ayant comme paramètre une imprimante destinataire et une seconde méthode "visualiser" pour la visualisation des travaux d'impression en cours.

La duplication d'une classe se fait en pointant sur les attributs et méthodes de la classe (voir par ex. US 5 710 926). Par conséquent, les attributs et méthodes de la classe sont communs à la classe originelle et à la classe dupliquée, de sorte que les deux classes ne sont pas indépendantes l'une de l'autre. Pour les rendre indépendantes en créant par héritage une nouvelle classe, et/ou pour instancier une classe et/ou pour cloner un objet, il faut non seulement dupliquer l'instance de la classe, mais aussi dupliquer toutes les instances liées directement ou indirectement à l'instance de la classe. Dans l'exemple ci-dessus, il faut donc d'abord dupliquer la classe "impression", les deux attributs, les deux méthodes et le paramètre de la première méthode. D'une manière générale, il faut faire des boucles pour dupliquer toute l'arborescence des instances qui forment la classe ou l'objet.

Les inconvénients de la dérivation actuelle d'une classe d'objets sont maintenant évidents. Elle nécessite des opérations longues et un grand espace de mémoire. Par exemple, la duplication actuelle nécessite de rechercher les feuilles, de les dupliquer successivement, de rechercher les parents de chacune des feuilles, de les dupliquer, de relier les feuilles dupliquées aux parents respectifs qui ont été dupliqués, et ainsi de suite jusqu'à la racine.

### Sommaire de l'invention.

Un but de l'invention est de faire rapidement une dérivation d'une classe.

Un second but est de ne pas avoir besoin d'un grand espace de mémoire.

L'invention a pour objet un procédé de dérivation d'une classe et/ou d'un objet ayant un nom donné, caractérisé en ce qu'il consiste à faire une copie de tout l'arbre de la classe ou de l'objet, à mémoriser la copie de l'arbre et à changer ledit nom pour attribuer un nom à la copie mémorisée.

De préférence, la copie est faite par une sérialisation de l'arbre représentatif de la classe ou dudit objet en copiant l'arbre dans une mémoire et la mémorisation de la copie de l'arbre consiste à la copier à nouveau en mémoire.

L'invention a aussi pour objets corollaires le système informatique en résultant et un support d'enregistrement, tel qu'une disquette magnétique ou un cédérom, incorporant un logiciel pour la mise en oeuvre du procédé.

### Présentation des dessins.

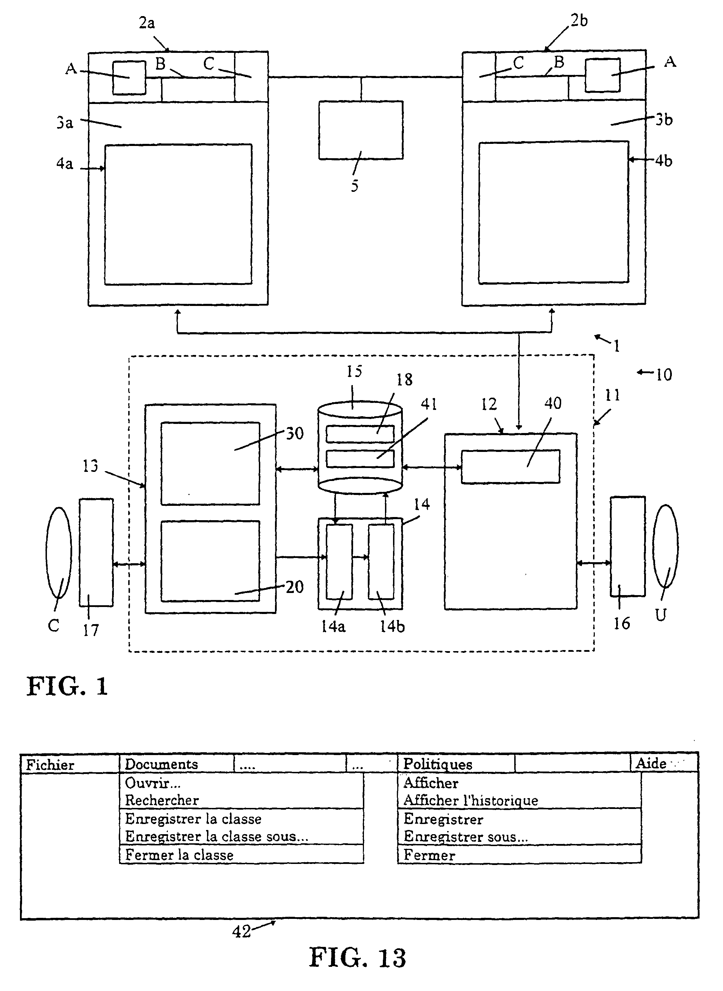

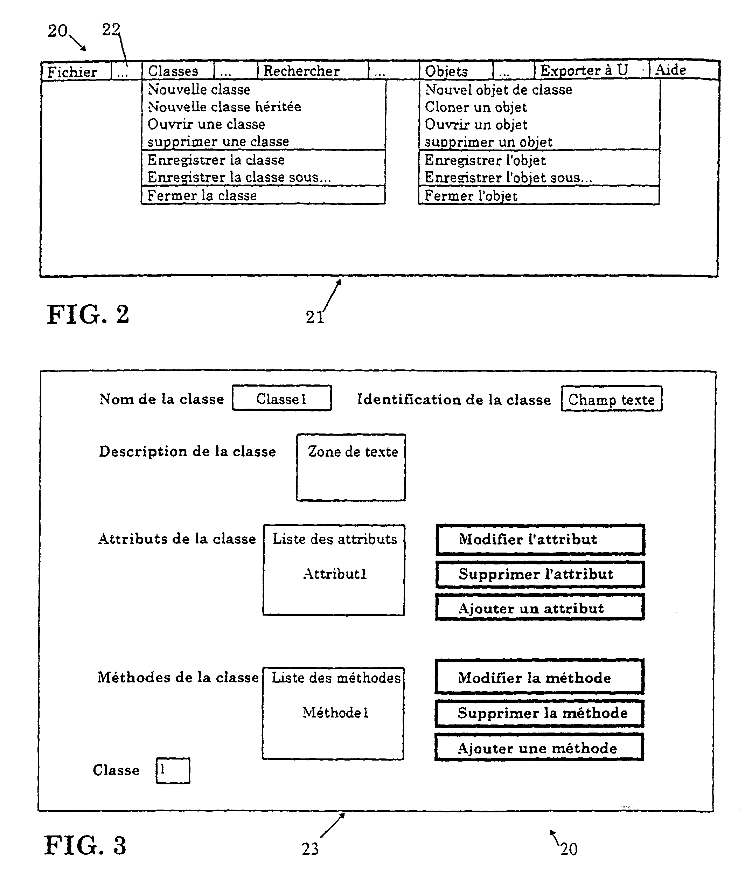

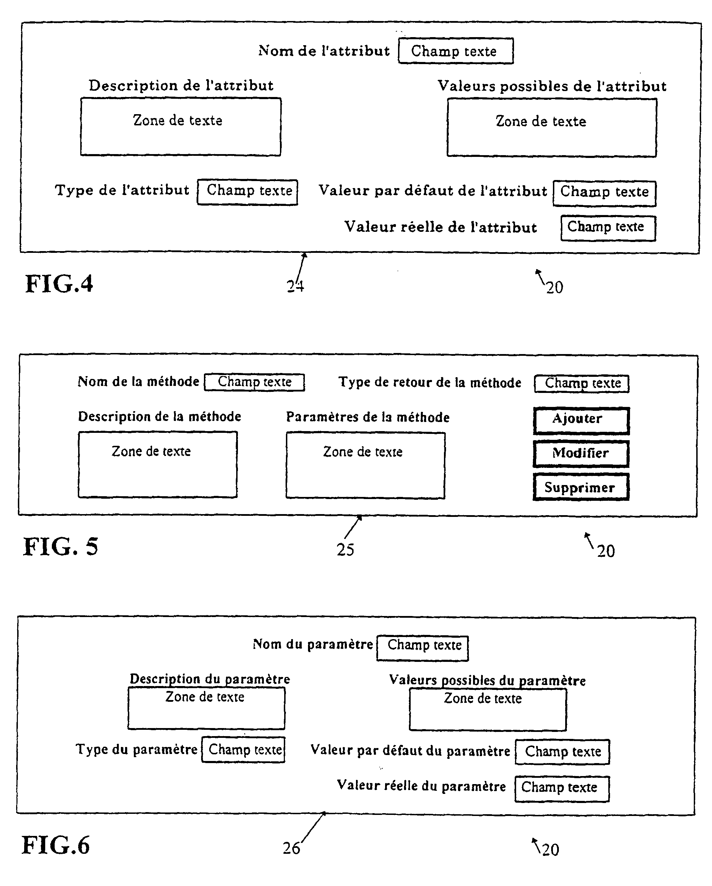

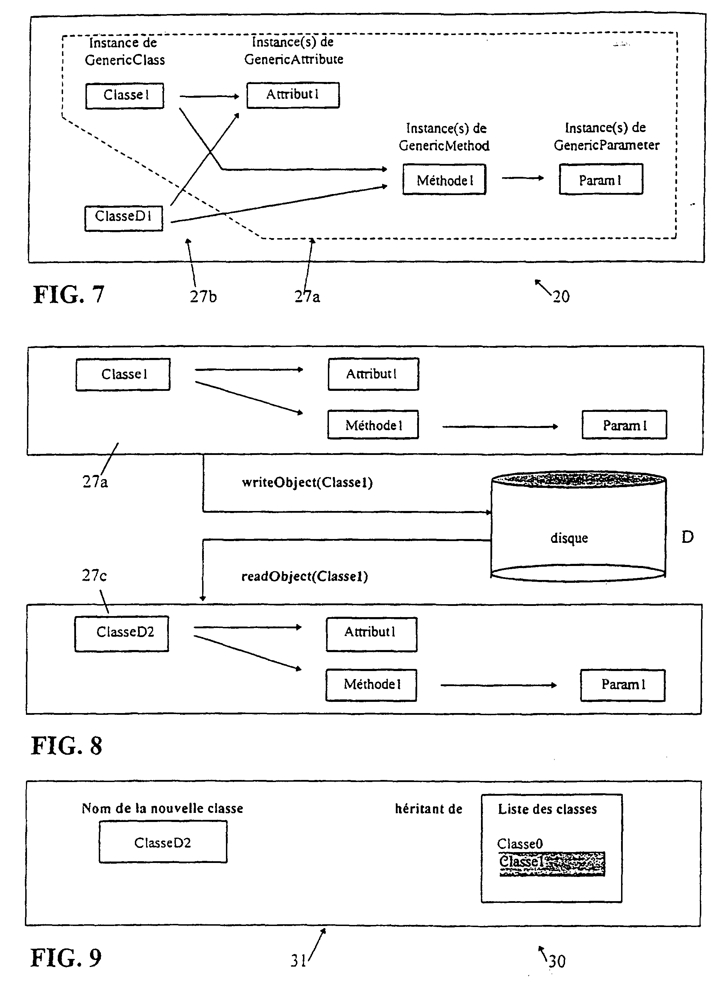

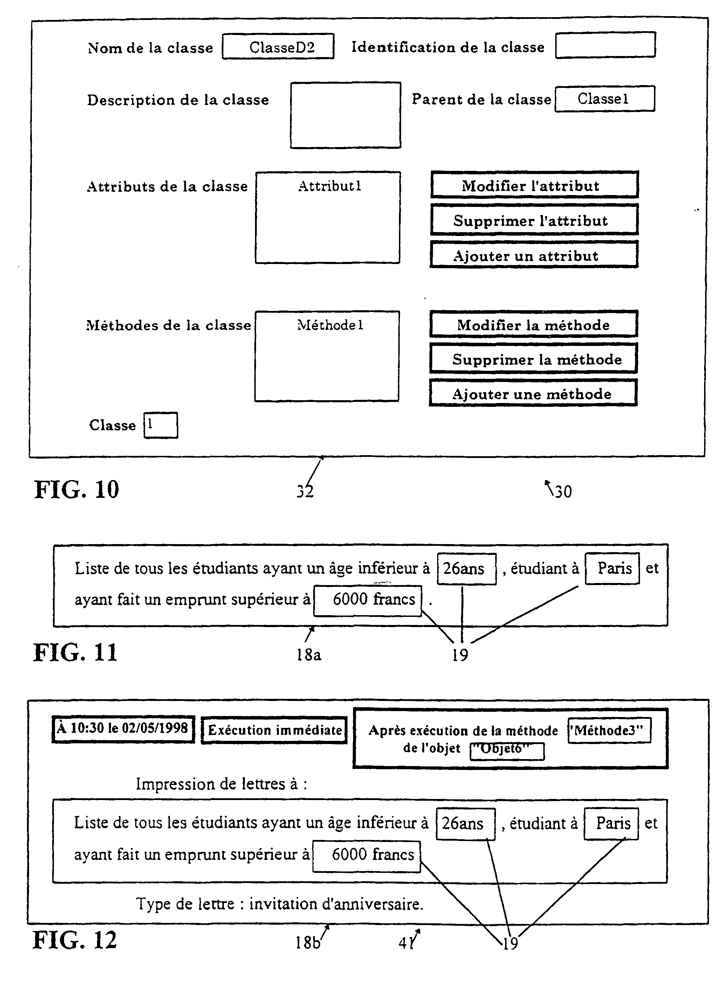

◆ La figure 1 est une vue synoptique d'un système informatique mettant en oeuvre le procédé de l'invention pour la dérivation d'une classe ou d'un objet.
◆ La figure 2 est une fenêtre servant à un concepteur pour la mise en oeuvre du procédé de l'invention.
◆ La figure 3 est une boîte de dialogue servant au concepteur pour créer dynamiquement une classe pour l'exploitation désirée du système par l'utilisateur.
◆ La figure 4 est une boîte de dialogue servant au concepteur pour définir un attribut de la classe présentée dans la figure 3.
◆ La figure 5 est une boîte de dialogue servant au concepteur pour définir une méthode de la classe présentée dans la figure 3.
◆ La figure 6 est une boîte de dialogue servant au concepteur pour définir un paramètre d'une méthode définie dans la figure 5.
◆ La figure 7 est une vue synoptique de la structure en arbre de la classe telle que définie au moyen des boîtes de dialogue présentées dans les figures 3 à 6.
◆ La figure 8 est une vue synoptique illustrant un procédé de dérivation de la classe présentée dans la figure 7.
◆ Les figures 9 et 10 sont des boîtes de dialogue servant au concepteur pour définir la classe dérivée en utilisant le procédé illustré dans la figure 8.
◆ Les figures 11 et 12 illustrent deux interfaces respectives servant à l'utilisateur pour la commande du système représenté sur la figure 1.
◆ La figure 13 est une fenêtre présentée à l'utilisateur pour l'utilisation des interfaces illustrées dans les figures 1, 11 et 12.

### Description détaillée d'exemples illustrant l'invention.

La figure 1 illustre un système d'information 10 exploité par un utilisateur U par l'intermédiaire d'une interface de commande 11. Le système 10 peut être un système quelconque. Le système 10 illustré inclut un ensemble informatique 1 comprenant au moins une machine, deux machines 2a et 2b dans l'exemple illustré. Chaque machine illustrée a, de façon bien connue, au moins un processeur A connecté par l'intermédiaire d'un bus B à une mémoire 3. D'une manière générale, la mémoire peut être locale ou distribuée, ou les machines peuvent former des noeuds d'un réseau dans l'ensemble 1. Dans chaque mémoire 3 sont stockés des moyens logiciels, notamment un ou plusieurs systèmes d'exploitation 4. Afin de mieux mettre en relief les avantages de l'invention, il sera considéré comme un système hétérogène représentatif d'un cas difficile à gérer. Les deux machines 2 sont supposées fonctionner sous deux systèmes d'exploitation respectifs 4a et 4b de types ou de versions différents l'un de l'autre, par exemple un système d'exploitation du type propriétaire et un système d'exploitation de type ouvert, par exemple celui connu sous l'un des noms de marque déposée UNIX ou Windows NT. L'ensemble informatique 1 dispose aussi de moyens de base de données, appelés base de données 5 et pouvant être constitués d'une ou plusieurs bases de données locales ou distantes. Les machines 2 ont aussi chacune une interface d'entrée-sortie C connectée au bus B. Les interfaces d'entrée-sortie C des deux machines sont interconnectées entre elles ainsi qu'à la base de données C.

L'interface de commande 11 comprend un module de commande 12, un module de conception 13, un générateur 14 d'interfaces et une base d'interface 15. Le module 12 est connecté de façon bidirectionnelle à l'ensemble informatique 1. Le module 13 peut aussi être connecté de la même façon à l'ensemble informatique 1. La base d'interface 15 est connectée de façon bidirectionnelle aux modules 12 et 13 et au générateur 14. Le générateur 14 est aussi connecté pour être commandé par le module 13. Le module de commande 12 sert à l'utilisateur U pour commander et exploiter les données du système 10. Le module de conception 13 sert à un concepteur C, qui est un autre utilisateur de l'interface 11 mais qui est un spécialiste en informatique. Les deux utilisateurs U et C ont des consoles respectives 16 et 17 attachées aux modules respectifs 12 et 13.

En bref, l'utilisateur U définit des besoins pour connaître et améliorer le fonctionnement de l'entreprise et soumet ses besoins au concepteur C. Le concepteur C crée au moyen de son module 13 des objets logiciels répondant aux besoins de l'utilisateur U et les envoie au générateur 14 pour être converties en interfaces 18 (figures 11 et 12) correspondant à ses besoins et exprimant les commandes du système en un langage qui lui est compréhensible. Ces interfaces servent à l'utilisateur pour former des documents et seront appelées interfaces documentaires.

L'utilisateur U sera par exemple un directeur d'agence bancaire non spécialisé en informatique. On suppose par exemple que l'utilisateur U désire consulter l'ensemble informatique 1 de la banque pour faire des requêtes en vue d'obtenir une liste d'étudiants, clients de l'agence, et imprimer pour eux des lettres personnalisées d'information, d'invitation et de rappel. L'utilisateur U transmet ses besoins au concepteur C, par exemple lors d'une réunion entre eux. Le concepteur transcrit ces besoins en utilisant, dans une première étape, le module 13 pour créer, modifier et/ou supprimer des objets et des classes d'objets concernés par ces besoins. Par exemple, afin de satisfaire au besoin précité de l'utilisateur U, le concepteur C créera une classe impression avec : un premier attribut "liste de diffusion" selon un ensemble de critères, ici les étudiants de l'agence ; un second attribut "nombre d'exemplaires" (entier) ; une première méthode "imprimer" ayant comme paramètre l'imprimante destinataire ; et une seconde méthode "visualiser les opérations d'impression" pour connaître le déroulement de l'impression. Les objets et classes créés par le concepteur sont stockés dans la base d'interface 15. La transcription finale par le concepteur C des besoins de l'utilisateur U n'est contenue que dans des objets qui ont été directement créés précédemment ou qui sont des instances de classes définies précédemment. Ces objets sont contenus dans la base 15, qui est contenue dans l'interface de commande 11 dans l'exemple illustré mais qui pourrait être extérieure à l'interface 11 et incluse dans l'ensemble informatique 1. Les objets sont convertis en interfaces documentaires présentées à l'utilisateur U pour lui servir à former des documents de commande satisfaisant à ses besoins.

Le module 13 va d'abord être présenté. Il met en oeuvre deux outils logiciels 20 et 30 exécutant respectivement un procédé de création dynamique de classes et un procédé de dérivation de classes et objets. L'outil 20 de création dynamique de classes va maintenant être présenté.

La figure 2 illustre un exemple d'écran 21 qu'affiche la console 17 pour servir d'interface entre le concepteur C et le module 13. L'écran 21 a une barre 22 de menus incluant notamment les menus "Classes", "Objets", "Rechercher" et "Exporter à U". Le menu "Classes" permet de créer dynamiquement des classes d'objets, par héritage ou non. Il permet aussi d'ouvrir une classe pour éventuellement la modifier, l'enregistrer ou la fermer. Le menu "Objets" permet d'instancier les classes définies précédemment, afin de créer des objets qu'on peut ensuite cloner. Comme pour les classes, on peut ouvrir un objet, le modifier, l'enregistrer sur le disque et le fermer. Avec l'outil 20, le concepteur C peut définir les commandes qui se trouvent dans les deux menus tels qu'illustrés par exemple dans ceux de l'écran 21. Le menu "Classes" illustré contient les commandes "Nouvelle classe", "Nouvelle classe héritée", "Ouvrir une classe", "Supprimer une classe", "Enregistrer la classe", "Enregistrer la classe sous..." (Save the class as...) et "Fermer la classe". Le menu "Objets" contient les commandes "Nouvel objet de classe", "Cloner un objet", "Ouvrir un objet", "Supprimer un objet", "Enregistrer l'objet", "Enregistrer l'objet sous..." et "Fermer l'objet".

L'outil 20 met en oeuvre un procédé de génération dynamique d'une classe d'objets. Le procédé est déclenché automatiquement par le module de conception 13 lorsque le concepteur C active la commande "Nouvelle classe" du menu "Classes" de la fenêtre 22 de la figure 2. Le procédé de génération automatique d'une classe consiste à créer une classe générique globale "GenericClass" ayant deux membres possibles, l'un étant relatif à au moins un attribut et l'autre étant relatif à au moins une méthode , au moins l'un des deux membres étant une instance d'une classe générique, et à instancier la classe générique globale pour avoir ladite classe d'objets. Dans l'outil 20 illustré, deux classes génériques "GenericAttribute" et "GenericMethod" sont attribuées aux deux membres respectifs de la classe générique globale "GenericClass". En outre, si une méthode inclut au moins un paramètre non fixe, ce paramètre est lui même une instance d'une classe générique correspondante "GenericParameter".

D'une manière générale, les quatre classes génériques ainsi créées ne sont pas visibles par le concepteur C. Dans l'exemple illustré, elles sont mises à la disposition du concepteur C lorsqu'il exécute une commande dans les menus "Classes" et "Objets". Ainsi, une classe générique se définit comme une classe permettant au concepteur C de créer une nouvelle classe en créant une instance d'une classe générique globale. Puisque la création d'instances est dynamique dans tous les langages, la création d'une classe devient aussi dynamique pour le concepteur C. De même, sachant qu'un objet est une nouvelle instance d'une classe, la création d'un objet correspond alors aussi à la création d'une copie de cette classe, c'est-à-dire à une nouvelle instance d'une classe générique globale. Par conséquent, le procédé déclenché par l'outil 20 est aussi déclenché lorsque le concepteur C active la commande "Nouvel objet de classe" dans le menu "Objets" de la fenêtre 22 de la figure 2. Le procédé va maintenant être illustré de la façon qu'il se présente au concepteur C par l'intermédiaire de l'outil 20.

La figure 3 illustre un exemple de boîte de dialogue 23 que l'outil 20 ouvre lorsque le concepteur C clique sur la commande "Nouvelle classe" du menu "Classes". Le concepteur C utilise la boite de dialogue 23 pour saisir toutes les données relatives à une nouvelle classe qui n'hérite pas. On sait que les données sont les attributs et les méthodes de la nouvelle classe.

La boîte 23 illustrée contient, pour la saisie des données,
- un champ de texte "Nom de la classe"
- un champ de texte "Identification de la classe (Class Id)"
- une zone de texte "Description de la classe"
- une liste "Méthodes de la classe" et
- une liste "Attributs de la classe"

La boîte 23 contient aussi les six boutons de commande encadrés en trait épais :
- "Modifier la méthode"
- "Supprimer la méthode"
- "Ajouter une méthode"
- "Modifier l'attribut"
- "Supprimer l'attribut" et
- "Ajouter un attribut".

Lorsque cette boîte de dialogue est validée, elle se traduit par la création d'une instance d'une classe générique globale, dite "GenericClass". La classe générique globale de l'exemple illustré dans la figure 3 a plusieurs attributs.

Le premier attribut est un nom, formé par une chaîne de caractères désignant le nom de la classe. Il s'écrit en remplissant le champ "Nom de la classe" de la boîte 23.

Le second attribut est une identification de la classe, formée par une chaîne de caractères permettant d'identifier de façon unique la classe ou l'objet dans le système. Cet attribut s'écrit en remplissant le champ "Identification de la classe" dans la boîte 23, par exemple in indiquant la date, l'heure de création, un nombre aléatoire formant un ticket, etc.

Le troisième attribut est une description, formée par du texte qui décrit la raison d'être de la classe. Il s'écrit en remplissant la zone "Description de la classe".

Le quatrième attribut est un tableau nommé "Attributs", qui référence les attributs de la classe. Les attributs de la classe sont eux-mêmes des instances d'une classe générique d'attributs, dite "GenericAttribute", qui a comme attributs :
- le nom de l'attribut,
- la description de l'attribut,
- soit le type de l'attribut, soit les valeurs possibles de -l'attribut,
- la valeur par défaut de l'attribut, donnée à la création de la classe "GenericAttribute", et
- la valeur réelle de l'attribut, qui est invisible au concepteur C et qui n'est donc pas définie à la création de la classe. Elle est définie par l'utilisateur U de la façon décrite ultérieurement.

Par exemple, la classe "Attributs[i]" est une instance de "GenericAttribute" et référence le ième attribut de la classe définie par le concepteur C.

La figure 4 illustre une boite de dialogue 24 de l'outil 20 constitutif du quatrième attribut de "GenericClass". Cette boîte s'ouvre à partir de la boite 23, par exemple en nommant "Classe1" la classe issue par instanciation de la classe générique globale "GenericClass" et en activant le bouton "Ajouter un attribut". La boite 24 contient :
- un champ de texte "Nom de l'attribut",
- une zone de texte "Description de l'attribut",
- un champ de texte "Type de l'attribut",
- une zone de texte pour "Valeurs possibles de l'attribut",
- un champ de texte "Valeur par défaut de l'attribut", et
- un champ de texte "Valeur réelle de l'attribut" représenté en grisé sur la figure 4 pour indiquer qu'il n'est pas visible par le concepteur C.

De même, pour modifier un attribut, il suffit de sélectionner l'attribut dans la liste des attributs de la figure 3 et d'activer le bouton "Modifier l'attribut", de façon à avoir la boîte de dialogue 24 de la figure 4 et à modifier les données qui apparaissent dans la boîte 24.

En tant que premier attribut, on donne à l'attribut le nom "Attribut1" et on remplit les autres champs. La validation de la boîte de dialogue 24 se traduit par la création d'une instance de la classe générique "GenericAttribute". Le nom "Attribut1" va figurer dans la liste des attributs de la figure 3, comme indiqué.

Le cinquième attribut de la classe générique "GenericClass" est un tableau nommé "Méthodes", qui référence les méthodes de la classe. Ces méthodes sont aussi, dans l'exemple illustré, des instances d'une classe générique de méthodes dite "GenericMethod". Une méthode est définie par les attributs suivants :
- son nom,
- sa description,
- son type de retour,
- ses paramètres, et
- son script d'exécution.

La figure 5 illustre une boîte de dialogue 25 de l'outil 20 constitutif du cinquième attribut de "GenericClass". Cette boîte s'ouvre à partir de la boîte 23, par exemple en activant le bouton "Ajouter une méthode". La boîte 25 contient :
- un champ de texte "Nom de la méthode",
- une zone de texte "Description de la méthode",
- un champ de texte "Type de retour de la méthode",
- une liste de "Paramètres de la méthode",
- un bouton de commande "Ajouter",
- un bouton de commande "Modifier", et
- un bouton de commande "Supprimer".

En tant que première méthode, on donne un nom à la méthode, par exemple "Méthode1", et on remplit les autres champs. La validation de la boite de dialogue 25 se traduit par la création d'une instance de la classe générique "GenericMethod". Le nom "Méthode1" va figurer dans la liste des méthodes de la figure 3, comme indiqué.

La classe générique "GenericMethod" contient, en plus des attributs de la méthode, un tableau "Paramètres", qui référence les paramètres de la méthode. Le tableau peut être vide si la classe générique ne contient pas de paramètre à déterminer, ou peut ne pas exister si cette classe générique n'est destinée à n'avoir aucun paramètre déterminable ou si elle n'a que des paramètres fixes ou prédéterminés. Dans le tableau, les paramètres sont eux aussi des instances d'une classe générique "GenericParameter". Un paramètre d'une méthode est défini par ses attributs suivants :
- son nom,
- sa description,
- soit son type, soit ses valeurs possibles,
- sa valeur par défaut, et
- sa valeur réelle, non visible du concepteur C.

Par exemple, si le paramètre se rapporte au nombre de pages à imprimer, la valeur par défaut sera 1 mais l'utilisateur U pourra indiquer une valeur réelle autre, par exemple 3 pour avoir trois exemplaires des pages à imprimer.

La figure 6 illustre une boîte de dialogue 26 de l'outil 20 pour remplir la table de paramètres de "GenericMethod" dans la figure 5. La boîte 26 s'ouvre à partir de la boîte 25, en activant le bouton "Ajouter". La boîte 26 contient :
- un champ de texte "Nom du paramètre",
- une zone de texte "Description du paramètre",
- un champ de texte "Type du paramètre",
- une zone de texte "Valeurs possibles du paramètre",
- un champ de texte "Valeur par défaut du paramètre", et
- un champ de texte "Valeur réelle du paramètre" représenté en grisé sur la figure 5 pour indiquer que ce champ n'est pas visible du concepteur C.

En tant que premier paramètre, on lui donne par exemple le nom "Param1" et on remplit les autres champs. La validation de la boîte de dialogue 26 se traduit par la création d'une instance de la classe générique "GenericParameter". Le nom "Param1" va figurer dans la liste des paramètres de la figure 5.

La boîte de dialogue 23 de la figure 3 étant remplie, la classe "Classe1" est créée dynamiquement. On peut la valider en la sauvegardant avec la commande "Enregistrer la classe" ou "Enregistrer la classe sous...".

La figure 7 illustre la structure en arbre 27a de la classe "Classe1" résultant de la validation de la boîte 23. Dans la figure 7, la classe "Classe1" est une instance de la classe générique globale "GenericClass" et a un attribut "Attribut1" et une méthode "Méthode1" ayant elle-même un paramètre "Param1", qui sont tous les trois des instances de trois classes génériques respectives. Bien sûr, une autre classe, instance de la classe générique globale "GenericClass", pourrait avoir plusieurs instances de chacune des trois classes génériques "GenericAttribute", "GenericMethod" et "GenericParameter". Cette structure en arbre permet de dynamiquement modifier, ajouter et supprimer à tout moment des membres de la classe (attributs ou méthodes).

On sait qu'un objet est une instance d'une classe. L'activation de la commande "Nouvel objet de classe" dans le menu "Objets" de la fenêtre 21 de la figure 2 affiche sur la console 17 du concepteur C une boîte de dialogue (non illustrée) qui contient la liste de toutes les classes déjà définies. Le concepteur C peut en sélectionner une, qui sera la classe du nouvel objet. Dans un objet on donne éventuellement des valeurs aux attributs. Ces valeurs représenteront son identité et son état.

En outre, dans la classe générique globale "GenericClass" telle qu'elle apparaît de la figure 3 a de préférence un attribut supplémentaire consistant en un booléen "0" ou "1" indiquant si l'instance de la classe générique en cours représente une classe ou un objet. Dans l'exemple illustré, le booléen est "1" pour indiquer que le concepteur crée une classe. Le booléen se met automatiquement à la valeur correspondante en réponse à la commande "Nouvelle classe" ou "Nouvel objet de classe" qui a été actionnée par le concepteur C dans la fenêtre 22 de la figure 2. Dans l'exemple choisi, cet attribut n'est pas visible du concepteur C et est donc représenté en grisé.

D'autre part, dans la fenêtre 21 de la figure 2, le menu "Rechercher" est très utile au concepteur C pour faire une recherche puissante dans la base 15 pour y trouver des classes et des objets créés selon une liste de critères qu'il définit. Le concepteur C peut, par exemple, créer une nouvelle classe par héritage à partir de la classe qu'il a trouvée, au lieu de partir de zéro et refaire un travail déjà accompli.

Plus généralement, les boîtes de dialogue 23-26 servent donc au concepteur pour générer respectivement la classe générique globale et les classes génériques qui peuvent la composer. Bien que les boîtes de dialogue illustrées définissent complètement ces classes, tous les attributs, les types, les champs et zones de texte illustrés ne sont pas nécessaires. En particulier, les descriptions sont illustrées à une fin autre que le procédé de génération automatique de classes qui vient d'être décrit.

La description va maintenant porter sur l'outil 30 de dérivation d'une classe ou d'un objet, l'outil 30 étant contenu dans le module 13 de l'interface de commande 11 de la figure 1.

L'héritage avec la commande "Nouvelle classe héritée", l'instanciation avec la commande "Nouvel objet de classe" et le clonage avec la commande "Cloner un objet" nécessitent en commun la création dynamique d'une copie de la classe (pour l'héritage ou l'instanciation) ou d'une copie de l'objet (pour le clonage).

La figure 7 illustre aussi un arbre 27b d'une classe "ClasseD1" obtenue par duplication de "Classe1". Cette figure illustre, d'une manière générale, que la duplication de l'instance de "GenericClass" ne suffit pas, car la classe dupliquée "ClasseD1" va pointer aux mêmes instances "GenericMethod" et "GenericAttribute" de l'instance "Classe1" de "GenericClass". Par exemple, il ressort de la figure 7 que "Attribut1" est commun aux deux classes, alors que les deux classes devraient être distinctes et indépendantes. Par conséquent, pour dériver une classe ou un objet, c'est-à-dire pour créer par héritage une nouvelle classe, pour instancier une classe ou pour clouer un objet, il faut non seulement dupliquer l'instance de "GenericClass", mais aussi dupliquer chaque instance référencée directement ou indirectement par l'instance de "GenericClass".

D'autre part, les développeurs de logiciels utilisent une technique de sérialisation qui s'applique à de nombreux langages, tels que Java ou C++. La sérialisation permet de stocker tout objet sur un support d'enregistrement de données, un disque par exemple. Si par exemple un premier objet référence des objets, qui eux-mêmes référencent d'autres objets et ainsi de suite, il suffit d'écrire le premier objet sur le disque avec la méthode de sérialisation pour stocker automatiquement en mémoire l'arborescence de tous les objets référencés directement ou indirectement par le premier objet.

La figure 8 illustre schématiquement le principe du procédé de dérivation d'une classe "Classe1" ou d'un objet. L'outil 30 met en oeuvre ce procédé. L'exemple illustré porte sur la création d'une classe "ClasseD2" par héritage de la classe "Classe1" telle qu'illustrée dans la figure 7, étant bien entendu que le procédé peut s'appliquer de la même façon à l'instanciation d'une classe ou le clonage d'un objet. Comme indiqué à la figure 8, le procédé de dérivation consiste en une première étape à sérialiser la classe "Classe1" en la copiant sur un disque D, par exemple le disque dur d'une machine 2a ou 2b de l'ensemble informatique 1 de la figure 1. Ainsi, toute l'arborescence 27a de cette classe, telle qu'illustrée dans la figure 7, va être dupliquée et stockée dans le disque. La seconde étape consiste à lire la classe dupliquée, stockée dans le disque D, en la chargeant dans l'outil 30, c'est-à-dire dans la mémoire vive sur laquelle est chargé le programme de l'outil. Il en résulte la classe dupliquée "ClasseD2" ayant une arborescence 27c identique à celle de l'arborescence 27a de la classe mère "Classe1" mais indépendante de la classe mère. En langage Java par exemple, les deux étapes du procédé peuvent s'exécuter par exemple par les deux instructions suivantes :
*FileStream*.writeObject(Classe1) ;
   //pour sérialiser l'arborescence d'origine Classe 1
Nouvel objet ou Nouvelle classe = *FileStream*.readObject() ;
   // pour avoir une copie de Classe 1

La figure 9 illustre une boîte de dialogue 31 pour l'utilisation de l'outil 30. Cet exemple se rapporte à celui de la figure 9, qui porte sur la création d'une classe héritant d'une autre classe. En exécutant la commande "Nouvelle classe héritée" du menu "Classes" de la figure 3, la fenêtre de dialogue 31 de la figure 9 apparaît. Cette fenêtre contient une zone de texte "Nom de la nouvelle classe" et une liste des classes parmi lesquelles la classe mère peut être choisie. Dans l'exemple choisi, la classe "Classe1" de la liste est choisie, comme indiqué en grisé à la figure 9. Dans l'exemple précédent, la classe héritée se nomme "classeD2".

La figure 10 illustre un exemple de boîte de dialogue 32 résultant de la validation de la boîte 31. La boîte 32 est semblable à la boîte 23 de la figure 3. Par conséquent, seules les différences vont être indiquées ci-après. Les données contenues dans la boîte 32 sont remplies automatiquement par le logiciel de l'outil 30. Le nom de la classe est celui qui a été indiqué par le concepteur C dans la boîte 31 de la figure 9. La boîte 32 contient en plus un tableau indiquant le ou les parents de la classe, ici "Classe1" que le concepteur C a sélectionnée dans la liste de la boîte 31. Les autres données sont semblables à celles de la boîte 23, puisque l'arborescence 27c de la classe fille "ClasseD2" est la même que l'arborescence 27a de la classe mère "Classe1". Grâce aux boutons de commande de la boîte 32, il est possible de faire évoluer simplement la nouvelle classe "ClasseD2" indépendamment de la classe mère "Classel".

La classe générique globale "GenericClass" a donc un attribut supplémentaire nommé "parent", qui est un tableau contenant des instances de la classe générique globale, telles que Classe1. Le tableau permet de reconnaître la provenance de l'instance en cours de la façon suivante :
(a) Si l'instance en cours est un objet, alors :
   - si d'une manière générale "parent[0]" (indiqué par exemple dans le tableau auquel se réfère l'instance en cours) est un objet, l'objet en cours a été cloné à partir de parent[0],
   - si "parent[0]" est une classe, l'objet en cours est une instance de parent[0],
(b) Si l'instance en cours est une classe, alors "parent[0]" est
   - soit vide, ce qui veut dire que la classe a été créée sans héritage avec la commande "Nouvelle classe",
   - soit une classe (et non un objet), ce qui veut dire que la classe en cours a hérité de "parent[0]" grâce à la commande "Nouvelle classe héritée"
(c) Il en résulte, par itération, que le tableau "parent" indique tous les ascendants de l'instance en cours.

Le procédé ressort clairement des figures 8, 9 et 10. En réponse à la première instruction indiquée dans la figure 8, "Classe1" est sérialisée en la copiant sur le disque D. En réponse à la seconde instruction, la classe ainsi sérialisée est sauvegardée de nouveau en mémoire, mais avec modifications d'attributs, notamment le nom de classe "ClasseD2" et le tableau "Parent". Les deux arborescences 27a et 27c sont donc les mêmes, mais elles sont séparées l'une de l'autre. Par exemple, bien qu'elles aient les deux mêmes instances "Attribut1", en réalité ces deux instances sont complètement distinctes l'une de l'autre en mémoire et peuvent vivre indépendamment l'une de l'autre. Notamment, elles peuvent à tout moment être modifiées différemment l'une de l'autre. Cet exemple fait aussi ressortir qu'il en est de même pour les deux autres commandes "Nouvel objet de classe" et "Cloner un objet".

Plus généralement, il ressort de la description qui précède que le procédé de dérivation d'une classe d'objets et/ou d'un objet ayant un nom donné consiste à faire une copie de tout l'arbre de la classe ou de l'objet, à mémoriser la copie de l'arbre et à changer ledit nom pour attribuer un nom à la copie mémorisée. On a vu que de préférence la copie est faite par une sérialisation de l'arbre représentatif de ladite classe ou dudit objet en copiant l'arbre dans une mémoire D et la mémorisation de la copie de l'arbre consiste à la copier à nouveau en mémoire 30. En outre, on a vu aussi que la sérialisation, qui peut se faire dans divers langages, est particulièrement simple à mettre en oeuvre en langage Java®.

La fonction du générateur 14 d'interface va maintenant être décrite. Jusqu'à présent, on a vu comment le concepteur C peut facilement créer des classes d'objets et des objets répondant aux besoins de l'utilisateur U. Les classes et objets ainsi créés sont stockés dans la base d'interface 15. Cependant, ces classes et objets demeurent incompréhensibles et inexploitables pour l'utilisateur U. De préférence, il est d'ailleurs interdit à l'utilisateur U d'y avoir accès, afin d'assurer au concepteur leur intégrité. Le générateur 14 a pour fonction de transformer les classes et objets ainsi créés en des interfaces sous forme de documents dans lesquels les commandes répondant aux besoins exprimés par l'utilisateur U sont compréhensibles par lui. Afin de distinguer ces interfaces des autres interfaces impliquées dans cette description, elles seront appelées interfaces documentaires. Le langage employé dans ces interfaces documentaires peut être le langage courant et/ou un langage spécialisé de la compétence de l'utilisateur.

Le fonctionnement du générateur 14 va ressortir de l'exemple qui suit, qui reprend et explicite l'exemple précédent selon lequel l'entreprise est une agence bancaire, l'utilisateur U est le directeur de l'agence et le concepteur C est un informaticien de la banque. On suppose que le directeur U veut : (1) consulter le système d'information de la banque pour faire des requêtes dans les bases de données en vue d'obtenir une liste de ses clients d'un type donné, des étudiants dans l'exemple considéré, et (2) imprimer des lettres personnalisées de plusieurs types, telles que des lettes d'information, des lettres d'invitation et des lettres de rappel. L'informaticien C traduit l'exploitation désirée par le directeur en deux questions. En l'occurrence, l'informaticien crée en réponse deux classes d'objets : "consultation_système" et "impression" au moyen des deux outils 20 et 30. Il peut créer chacune de ces deux classes directement en activant la commande "Nouvelle classe" de la fenêtre 22 de la figure 2, soit indirectement par dérivation d'une classe semblable. Dans ce dernier cas, le concepteur C pourra actionner la commande "Rechercher" de la fenêtre 22 pour trouver une classe semblable. Si une classe semblable existe, il la sélectionne dans la liste des classes et peut la dériver, par exemple en activant la commande "Nouvelle classe héritée" de la figure 2 et en modifiant, ajoutant ou supprimant des attributs et/ou des méthodes.

Le générateur 14 met en oeuvre un procédé de génération d'une interface documentaire pour la commande d'un système informatique par un utilisateur, la commande étant faite à partir d'au moins un objet incluant des descriptions. Le procédé consiste à extraire de l'objet au moins en partie lesdites descriptions et à les organiser pour traduire le sens de ladite commande en un langage compréhensible à l'utilisateur et ainsi faire de ladite interface une interface documentaire. Le générateur 14 comprend donc un bloc d'extraction 14a et un bloc de génération 14b. Le bloc d'extraction 14a prélève de la base d'interface 15 l'objet sélectionné par le concepteur et y extrait les descriptions. Le bloc de génération 14b organise les descriptions pour former l'interface documentaire et la stocker dans la base d'interface 15.

Le procédé va être mieux compris à partir de l'exemple précédent. Parmi les attributs de la classe "consultation_système" de l'exemple considéré se trouvent des méthodes qui font appel à des commandes spécifiques pour l'exploitation des données du système, en l'occurrence aux bases de données du système 10. Parmi ces méthodes, le concepteur C crée une méthode "lister_étudiants" de façon à avoir comme description "Liste de tous étudiants ayant". L'ingénieur attribue à la méthode "lister_étudiants" un code de retour de type "liste" ayant comme description "la liste des noms et adresses". Il attribue aussi à cette méthode, au moyen des boîtes de dialogue 25 et 26 illustrées dans les figures 5 et 6, les trois paramètres tels que définis dans le tableau A ci-dessous.

**TABLEAU A**

| **nom** | **description** | **type** | **valeur par défaut** |
|---|---|---|---|
| "âge <" | "un âge inférieur à" | entier | 26 ans |
| "lieu d'étude" | ", étudiant à" | Paris, Versailles | Paris |
| "emprunt >" | et ayant fait un emprunt supérieur à" | entier | 6000 francs |

En ce qui concerne la classe "impression", l'ingénieur C crée une méthode "imprime_invitation" de façon à avoir une description telle que "Impression de lettres à :", et attribue à cette méthode un code de retour du type "void" signifiant que la méthode ne retourne pas de valeur, et deux paramètres tels que définis dans le tableau B ci-dessous.

**TABLEAU B**

| **nom** | **description** | **type** | **valeur par défaut** |
|---|---|---|---|
| "destinataire" | "Impression de lettres à" | liste | lister_étudiants de consultation_système |
| "type de lettre" | "type de lettre :" | invitation d'anniversaire rappel information sur l'emprunt Étude | information |

Ces tableaux indiquent comment remplir les boites de dialogue 25 et 26 des figures 5 et 6 pour constituer les deux classes "consultation_système" et "impression" à l'aide de la boite de dialogue 23 de la figure 3. Plus généralement, l'interface documentaire d'un objet est créée à partir des descriptions correspondant à cet objet, ses attributs, ses méthodes et les paramètres des méthodes.

Pour former une interface documentaire, le concepteur active dans la fenêtre 22 de la figure 2 le menu "Exporter à U". Cette commande appelle le générateur 14 pour générer une interface documentaire de l'objet sélectionné. Le générateur 14 extrait les descriptions de l'objet et les organise pour former l'interface documentaire.

La figure 11 illustre l'interface documentaire 18a de la méthode "lister_étudiants". On y voit que l'interface documentaire 18a a été obtenue par extraction des descriptions de la méthode et de ses paramètres, telles que définies dans le tableau A. En particulier, les valeurs "26 ans", "Paris" et "6000 francs" sont les valeurs par défaut indiquées au tableau A. De manière générale, une interface documentaire 18 comprend du texte et au moins un champ possible 19 dont le contenu initial est fait de valeurs par défaut et peut être modifié par l'utilisateur U.

La figure 12 illustre un exemple d'interface documentaire 18b de la méthode "imprime_invitation" de la classe "imprimer" définie précédemment. Les exemples des figures 11 et 12 suffisent à l'homme du métier pour savoir comment construire une interface documentaire relative à tout un objet. D'une manière générale, lorsque l'objet contient toutes les descriptions, elles sont de préférence organisées par le générateur 14 dans l'ordre suivant :
1. la description de l'objet (non illustrée), par exemple "impression" ;
2. la description de chaque attribut (non illustrée) , par exemple le numéro de l'imprimante, la qualité d'impression, la couleur de l'encre, le papier d'impression ; cette description est suivie d'un champ qui correspond à sa valeur ; si l'attribut a un nombre limité de valeurs, ce champ est une liste contenant toutes les valeurs possibles et ne faisant apparaître que la valeur sélectionnée ;
3. la description de chaque méthode (voir tableaux A et B, figures 11 et 12 et le texte s'y rapportant), cette description étant attachée et de préférence suivie de :
   3.1. la description de sa valeur de retour, attachée ou suivie d'un champ qui représente cette valeur, et
   3.2. la description de chacun de ses paramètres, attachée ou suivie d'un champ (19) représentatif de la valeur du paramètre ;
4. un moyen de commande (voir figure 12) indiquant quand la méthode doit être exécutée, l'exécution pouvant être immédiate ou différée, soit à un moment déterminé par une date et une heure, soit intervenir à la suite d'une autre méthode définie.
   4.1. Dans le premier cas, un bouton de commande est libellé "Exécution immédiate" ;
   4.2. Dans le second cas, un bouton de commande inclut une étiquette de valeur "à" (par exemple, --imprimer "à"--) suivie d'un champ "heure" et d'un champ "date" lié à un calendrier des jours ouvrables de l'année;
   4.3. Dans le troisième cas, un bouton de commande inclut une étiquette intitulée "après la fin d'exécution de" suivie d'un champ permettant de choisir une méthode d'un objet quelconque et signifie que la méthode sera exécutée après la fin d'exécution de la méthode sélectionnée.

Le concepteur C a la possibilité de changer la présentation de la page, ajouter ou enlever des champs, sélectionner les descriptions à prendre en compte, et modifier le texte de descriptions et des types pour rendre la compréhension du document plus facile. Il s'ensuit qu'un même objet peut générer plusieurs interfaces documentaires adaptées à des besoins particuliers offerts dans l'objet. Par exemple, on a vu précédemment que l'objet "impression" peut avoir un grand nombre d'attributs et de méthodes, qui offre un grand choix d'interfaces documentaires en fonction des attributs et méthodes adaptées aux besoins. Il est bien sûr conseillé au concepteur C de faire les interfaces documentaires 18 avec l'aide de l'utilisateur U.

La description va maintenant porter sur le module de commande 12 servant à l'utilisateur U pour obtenir les interfaces documentaires 18 de la base 15. Le module 12 contient un bloc 40 de génération de documents 41 issus des interfaces documentaires stockés dans la base 15. Le bloc 40 et donc connecté à la base 15 pour y prélever les interfaces documentaires 18 et déterminer les documents de commande 41 adaptés aux besoins particuliers de l'utilisateur U. Par exemple, en supposant que l'utilisateur a besoin du document "impression", une interface incluant la méthode illustrée dans la figure 12 va se présenter à l'utilisateur, qui pourra modifier les valeurs des champs 19 et sélectionner les boutons de commande d'exécution pour en faire un document 41. Le document 41 illustré dans la figure 12 correspond à l'interface documentaire 18 dans laquelle les valeurs des champs 19 ont maintenues inchangées par l'utilisateur et le bouton d'exécution différée à une heure prédéterminée a été activé (en grisé dans la figure 12).

La figure 13 illustre un exemple de boîte de dialogue 42 présentée à l'utilisateur U par le module d'utilisateur 12. La barre de menus de la boîte 42 contient notamment deux menus principaux "Documents" et "Politiques". Dans le menu "Documents" se trouvent la commande "Rechercher" pour trouver des interfaces documentaires, par exemple à partir des descriptions des objets correspondants, et la commande "Ouvrir" pour lister les interfaces documentaires par le nom de leurs objets correspondants et y sélectionner un nom d'objet. Un objet sélectionné s'affiche avec la description de l'objet. De cette interface, l'utilisateur en fait le document désiré. Dans le menu "Documents" se trouvent aussi bien sûr les commandes de sauvegarde (Enregistrer et Enregistrer sous...) et de fermeture du document.

Le menu "Politiques" contient notamment deux commandes "Afficher" et "Afficher l'historique". La commande "Afficher" (display) affiche l'ensemble des documents créés par l'utilisateur dans l'ordre d'exécution des commandes qu'il a choisi. Cet ensemble définit la politique de l'utilisateur. Il dispose ainsi d'une vue globale des méthodes qu'il a activées à partir de plusieurs documents. Il peut la valider ou la modifier. Par exemple, le fait de cliquer deux fois sur une méthode choisie entraîne l'ouverture du document correspondant pour d'éventuelles modifications. La commande "Afficher l'historique" présente toutes les méthodes qui ont été exécutées par l'utilisateur, l'état de fin d'exécution, et l'heure. Le menu contient aussi les commandes de sauvegarde et de fermeture.

## Revendications

1. Procédé de dérivation d'une classe et/ou d'un objet ayant un nom donné (classe1), consistant à faire une copie (27c) de tout l'arbre (27a) de la classe ou de l'objet, à mémoriser (D) la copie de l'arbre et à changer ledit nom pour attribuer un nom (classeD2) à la copie mémorisée.

2. Procédé selon la revendication 1, **caractérisé en ce que** la copie est faite par une sérialisation de l'arbre représentatif de ladite classe ou dudit objet en copiant l'arbre dans une mémoire (D) et la mémorisation de la copie de l'arbre consiste à la copier à nouveau en mémoire (30).

3. Procédé selon la revendication 1 ou 2, **caractérisé en ce que** la dérivation est un héritage de la classe (classe 1).

4. Procédé selon la revendication 1 ou 2, **caractérisé en ce que** la dérivation est une instanciation de la classe (classe1).

5. Procédé selon la revendication 1 ou 2, **caractérisé en ce que** la dérivation est un clonage d'un objet.

6. Procédé selon l'une des revendications 1 à 5, **caractérisé en ce qu'**il consiste à générer automatiquement la classe ou l'objet dérivé au moyen d'un outil (30) présentant au moins une boîte de dialogue (21).

7. Procédé selon la revendication 6, **caractérisé en ce qu'**il est mis en oeuvre par un concepteur informaticien (C) utilisant une interface de commande (11) du système informatique (10) pour servir à la commande du système informatique par un utilisateur (U) pouvant être non informaticien.

8. Système informatique (10), **caractérisé en ce qu'**il met en oeuvre le procédé défini selon l'une des revendications là 7.

9. Système selon la revendication 8, comprenant un ensemble informatique (1) et une interface de commande (11), **caractérisé en ce qu'**il est mis en oeuvre dans l'interface de commande.

10. Système selon la revendication 9, **caractérisé en ce qu'**il est mis en oeuvre dans un module de conception (13) de l'interface de commande (11) par un concepteur informaticien (C) utilisant une console (17) pour servir à la commande du système informatique par un utilisateur (U) pouvant être non informaticien.

## Patentansprüche

1. Verfahren zum Ableiten einer Klasse und/oder eines Objekts, die einen gegebenen Namen haben (classe1), das darin besteht, eine Kopie (27c) des gesamten Baums (27a) der Klasse oder des Objekts zu machen, die Kopie des Baums zu speichern (D) und den Namen zu ändern, um der gespeicherten Kopie einen Namen (classeD2) zu verleihen.

2. Verfahren nach Anspruch 1, **dadurch gekennzeichnet, dass** die Kopie durch eine Serialisierung des die Klasse oder das Objekt repräsentierenden Baums gemacht wird, indem der Baum in einen Speicher (D) kopiert wird, und die Speicherung der Kopie des Baums darin besteht, dass sie erneut in den Speicher (30) kopiert wird.

3. Verfahren nach Anspruch 1 oder 2, **dadurch gekennzeichnet, dass** die Ableitung ein Erbe der Klasse (classe1) ist.

4. Verfahren nach Anspruch 1 oder 2, **dadurch gekennzeichnet, dass** die Ableitung eine Instanziierung der Klasse (classel) ist.

5. Verfahren nach Anspruch 1 oder 2, **dadurch gekennzeichnet, dass** die Ableitung eine Klonierung eines Objekts ist.

6. Verfahren nach einem der Ansprüche 1 bis 5, **dadurch gekennzeichnet, dass** es darin besteht, die Klasse oder das Objekt, das mittels eines Werkzeugs (30) abgeleitet wird, das wenigstens eine Dialogbox (21) aufweist, automatisch zu erzeugen.

7. Verfahren nach Anspruch 6, **dadurch gekennzeichnet, dass** es durch einen Informatikfachmann (C) ausgeführt wird, der eine Steuerschnittstelle (11) des Datenverarbeitungssystems (10) verwendet, um die Steuerung des Datenverarbeitungssystems durch einen Anwender (U), der kein Informatiker zu sein braucht, zu unterstützen.

8. Datenverarbeitungssystem (10), **dadurch gekennzeichnet, dass** es das in einem der Ansprüche 1 bis 7 definierte Verfahren ausführt.

9. System nach Anspruch 8, das eine Datenverarbeitungsgesamtheit (1) und eine Steuerschnittstelle (11) umfasst, **dadurch gekennzeichnet, dass** es in der Steuerschnittstelle ausgeführt ist.

10. System nach Anspruch 9, **dadurch gekennzeichnet, dass** es in einem Entwicklungsmodul (13) der Steuerschnittstelle (11) durch einen Informatikfachmann (C) ausgeführt ist, der eine Tastatur (17) verwendet, um die Steuerung des Datenverarbeitungssystems durch einen Anwender (U), der kein Informatiker zu sein braucht, zu unterstützen.

## Claims

1. Method for deriving a class and/or an object having a given name (class 1), consisting in making a copy (27c) of the whole tree (27a) of the class or object, storing (D) the copy of the tree and changing said name in order to assign a name (class D2) to the stored copy.

2. Method according to Claim 1, **characterised in that** the copy is made by serialising the tree representing said class or said object by copying the tree into a memory (D) and storing the copy of the tree consists in copying it to memory (30) once again.

3. Method according to Claim 1 or 2, **characterised in that** the derivation is an inheritance of the class (class 1).

4. Method according to Claim 1 or 2, **characterised in that** the derivation is an instantiation of the class (class 1).

5. Method according to Claim 1 or 2, **characterised in that** the derivation is a cloning of an object.

6. Method according to one of Claims 1 to 5, **characterised in that** it consists in automatically generating the class or the derived object by means of a tool (30) having at least one dialogue box (21).

7. Method according to Claim 6, **characterised in that** it is implemented by a data processing designer (C) using a command interface (11) of the data processing system (10) to be used for commanding the data processing system by a user (U), who does not have to be a data processing specialist.

8. Data processing system (10), **characterised in that** it implements the method defined according to one of Claims 1 to 7.

9. System according to Claim 8, comprising a data-processing unit (1) and a command interface (11), **characterised in that** it is implemented in the command interface.

10. System according to Claim 9, **characterised in that** it is implemented in a design module (13) of the command interface (11) by a data processing designer (C) using a console (17) to be used for commanding the data processing system by a user (U), who does not have to be a data processing specialist.
